Europäisches Patentamt

European Patent Office

Office européen des brevets

(11) Numéro de publication: **0 083 950**

**A2**

# (12) DEMANDE DE BREVET EUROPEEN

(21) Numéro de dépôt: 83200012.9

(22) Date de dépôt: 06.01.83

(51) Int. Cl.³: **B 25 J 11/00**

(30) Priorité: 08.01.82 BE 6047578

(43) Date de publication de la demande:
20.07.83 Bulletin 83/29

(84) Etats contractants désignés:
AT CH DE FR GB IT LI LU NL SE

(71) Demandeur: DISTRIBEL GAS WELDING S.A. en abrégé
DISTRIBEL S.A.
rue Godin 33
B-4850 Verviers(BE)

(72) Inventeur: Bebronne, René
avenue Mullendorf 121
B-4800 Verviers(BE)

(74) Mandataire: Dellicour, Paul
Office de Brevets E. Dellicour rue Fabry 18/012
B-4000 Liège(BE)

(54) Terminal de robot de soudage.

(57) Dans un système d'orientation de torche de soudage, permettant d'imprimer à l'outil trois types de mouvements - deux mouvements de rotation et un mouvement de translation - avec des amplitudes confortables, la transmission de mouvements est obtenue par un ensemble mécanique unique comportant trois plateaux orientables superposés et deux vis à billes.

Sur chaque face d'un plateau intermédiaire sont fixés les paliers d'une vis à billes et de part et d'autre de ce plateau intermédiaire est emboîté un plateau d'entraînement monté sur roulements et entraînant la vis à billes correspondante.

FIG.3

EP 0 083 950 A2

- 1 -

<u>Terminal de robot de soudage</u>.

La présente invention est relative à un système d'orientation de torche de soudage ou autres outils électriques permettant d'imprimer à l'outil trois types de mouvement et concerne plus particulièrement un terminal de robot de soudage.

On rencontre habituellement deux rotations pour orienter un outil dans l'espace. Imprimer à un outil trois types de mouvement n'est possible jusqu'à présent que par la combinaison d'ensembles mécaniques distincts imprimant chacun un type de mouvement. Ces systèmes connus sont encombrants et onéreux.

Pour remédier à ces inconvénients il a paru avantageux de créer un système d'orientation mécanique simple et compact pour imprimer à l'outil en plus des deux rotations, que l'on rencontre habituellement, une translation.

Un objet de l'invention est de créer un système d'orientation donnant une très grande précision dans le positionnement de l'outil ainsi qu'une vitesse de positionnement élevée.

Un système d'orientation suivant l'invention est caractérisé en ce que la transmission de mouvements est obtenue par un ensemble mécanique unique comportant trois plateaux orientables superposés et deux vis à billes.

Suivant l'invention, sur chaque face d'un plateau intermédiaire sont fixés les paliers d'une vis à billes et de part et d'autre de ce plateau intermédiaire est emboîté un plateau d'entraînement monté sur roulements et entraînant la vis à billes correspondante.

Suivant l'invention également, l'outil est fixé dans l'axe défini par un point articulé sur l'écrou d'une des vis à billes et par un point articulé sur l'écrou de l'autre vis à billes.

L'invention est décrite avec plus de détails dans la description qui suit, basée sur les dessins annexés à titre d'exemple uniquement et montrant en :

Figures 1 et 2 deux schémas destinés à comprendre le système d'orientation suivant l'invention;

Figure 3 une coupe dans une vue schématique en élévation d'un terminal de torche de soudage comportant le système d'orientation suivant l'invention.

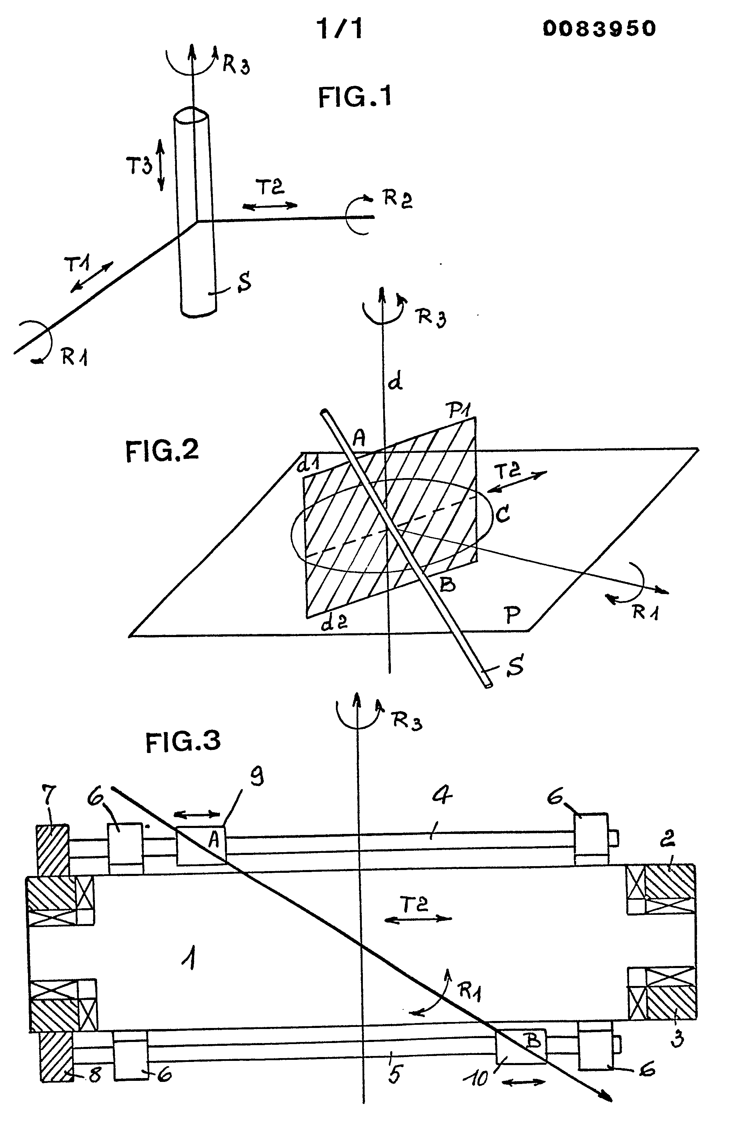

Dans un espace réel à trois dimensions, pour assurer l'orientation d'une torche de soudage S, deux degrés de liberté - soit R1 et R3 - sont nécessaires et suffisants (figure 1) mais, suivant l'invention, à ces deux rotations il est prévu d'ajouter une translation T2, ce qui permettra d'obtenir pour la torche de soudage : l'orientation, un mouvement oscillant linéaire, un mouvement oscillant pendulaire et un mouvement circulaire.

Ces mouvements sont obtenus comme suit (figure 2) :

Par le centre C d'une circonférence inscrite dans un plan P est tracée une droite D perpendiculaire audit plan. Par deux points de D équidistants de part et d'autre du plan P sont tracées deux droites D1 et D2 parallèles au plan et de même longueur que le diamètre de la circonférence C. Ces deux droites D1, D2 définissent un plan P1 perpendiculaire au plan P et inscrit dans la circonférence C. La torche de soudage S, qui fait partie de P1, possède deux points A, B mobiles respectivement sur D1, D2.

Les déplacements dans un même sens de A et B sur D1 et D2 impriment à la torche de soudage S la translation T2 définie ci-dessus. Ces déplacements en sens contraire impriment à ladite torche de soudage la rotation R1, et la rotation du plan P1 dans la circonférence C imprime à la torche de soudage la rotation R3.

Dans la pratique le système d'orientation est réalisé au moyen de trois plateaux orientables 1, 2, 3 et deux vis à billes 4, 5 (figure 3). Sur le plateau d'orientation 1 sont fixés de part et d'autre les paliers 6 des vis à billes 4, 5. De part et d'autre du plateau 1 également sont emboîtés les plateaux d'entraînement 2, 3 montés sur roulements. Les plateaux 2, 3 entraînent respectivement les vis 4, 5 par l'intermédiaire de galets 7, 8.

Le point A est articulé sur l'écrou 9 de la vis à billes 4 et est relié au point B, articulé sur l'écrou 10 de la vis à bille 5, par un axe coulissant dans une cage à billes avec canal de recirculation linéaire. La torche de soudage S est fixée dans l'axe défini par AB.

La rotation dans un même sens des plateaux 2 et 3 déplace les points A et B dans des directions opposées, ce qui donne la rotation R1.

La rotation dans des sens opposés des plateaux 2 et 3 déplace les points A et B dans la même direction, ce qui donne la translation T2.

La rotation dans le même sens des trois plateaux 1, 2, 3 avec la même amplitude donne la rotation R3.

Il est prévu que les trois plateaux sont constitués par des pignons à entraînement par courroies dentées, entraînées elles-mêmes par des moteurs d'entraînement du type pas à pas.

Les moteurs d'entraînement intégrés dans l'unité d'orientation décrite ci-dessus font de celle-ci un élément entièrement indépendant, qui peut être utilisé seul ou bien comme élément modulaire de positionnement sur diverses machines.

Des essais ont été réalisés pour un terminal de robot de soudage sur les bases suivantes avec les résultats suivants :

- rapport de réduction galet/plateau = 1/16
- rapport de réduction plateau/pignon moteur = 4
- rapport total = 4 : 1 tour moteur = 4 tours de vis
- 1 tour moteur = 200 pas : 1 tour de vis = 50 pas
- 1 tour de vis = 3 mm d'avance : 1 pas moteur = 0,06 mm d'avance
- le plus petit déplacement programmable du terminal de robot de soudage est égal à 0,06 mm
- vitesse maximum en translation = 3.000 pas/sec = 180 mm/sec
- la vitesse de rotation R1 peut être le double de la vitesse en translation par déplacement dans des directions opposées des points A et B.

- la translation T2 maximale est de 210 mm , lorsque AB
  est perpendiculaire au plateau.
- l'angle de la rotation R1 maximal est de 90° (3.200
  pas)
- la précision dans l'inclinaison de la torche est d'environ 0,03°
- il n'y a pas de limitation pour la rotation R3 de la
  torche de soudage.

Revendications

1. Système d'orientation de torche de soudage ou autres outils électriques, permettant d'imprimer à l'outil trois types de mouvements, deux mouvements de rotation (R1 - R3) et un mouvement de translation (T2), avec des amplitudes confortables, caractérisé en ce que la transmission de mouvements est obtenue par un ensemble mécanique unique comportant trois plateaux orientables superposés (1,2,3) et deux vis à billes (4,5).

2. Système d'orientation suivant la revendication 1, caractérisé en ce que sur chaque face d'un plateau intermédiaire (1) sont fixés les paliers (6) d'une vis à billes (4,5) et de part et d'autre de ce plateau intermédiaire (1) est emboîté un plateau d'entraînement (2,3) monté sur roulements et entraînant la vis à billes correspondante (4,5).

3. Système d'orientation suivant l'une quelconque des revendications 1 et 2, caractérisé en ce que l'outil (S) est fixé dans l'axe défini par un point (A) articulé sur l'écrou (9) d'une des vis à billes (4) et par un point (B) articulé sur l'écrou (10) de l'autre vis à billes (5).

4. Système d'orientation suivant la revendication 2, caractérisé en ce que les plateaux d'entraînement (2,3) entraînent leur vis respective (4,5) par l'intermédiaire de galets (7,8).

5. Système d'orientation suivant l'une quelconque des revendications 1 à 4, caractérisé en ce que les trois plateaux (1,2,3,) sont constitués par des pignons à entraînement par courroie crantée entraînée par des moteurs d'entraînement du type pas à pas.

6. Système d'orientation suivant la revendication 5, caractérisé en ce que, par des moteurs d'entraînement intégrés, il constitue un élément entièrement indépendant utilisable seul ou comme élément modulaire de positionnement sur diverses machines.

FIG.1

FIG.2

FIG.3